# EUROPEAN PATENT APPLICATION

(11) **EP 4 738 531 A1**
(43) Date of publication of application: **06.05.2026**
(21) Application number: 25205273.3
(22) Date of filing: 29.09.2025
(51) Int. Cl.: H01M 10/613, H01M 10/6557, H01M 10/6567, H01M 10/643

(54) **BATTERY MODULE AND METHOD FOR MANUFACTURING BATTERY MODULE**

(30) Priority: 30.10.2024 JP 2024190348
(71) Applicant: AISIN CORPORATION, Aichi 448-8650 (JP)
(72) Inventor: KATO, Mitsuhiko, Kariya, 448-8650 (JP); UMEMURA, Eisuke, Kariya, 448-8650 (JP); NINOMIYA, Suguru, Kariya, 448-8650 (JP)
(74) Representative: TBK

(57) **Abstract**

A battery module (5) includes at least one battery cell (1), a heat exchange member (2) in which a flow path (24) through which a heat medium flows is formed, and a holding member (3) that holds a positional relationship between the battery cell (1) and the heat exchange member (2), in which, assuming that a direction, in which the battery cell (1) and the heat exchange member (2) are arranged side by side, is an arrangement direction (X) and a surface of the battery cell (1) facing the heat exchange member (2) side is a heat exchange member side facing surface (8c): the heat exchange member side facing surface (8c) has a shape having unevenness in the arrangement direction (X); and the heat exchange member (2) has higher flexibility than the heat exchange member side facing surface (8c), and is pressed toward the heat exchange member side facing surface (8c) side by the holding member (3) in a state of being deformed following the shape of the heat exchange member side facing surface (8c).

## Description

### TECHNICAL FIELD

The present disclosure relates to a battery module and a method for manufacturing a battery module.

### BACKGROUND DISCUSSION

JP 2022-506553 T discloses a battery module (21) including a battery cell (30), a heat exchange member (50/230) that exchanges heat with the battery cell (30), and a potting material (231) that fixes a positional relationship between the battery cell (30) and the heat exchange member (50) (reference numerals in parentheses in the background art are those of the referenced document). The potting material (231) functions as an adhesive for fixing the battery cell (30) and the heat exchange member (50/230) in close contact with each other.

In recent years, improvement in environmental friendliness is also required in the battery module as described above in order to reduce the environmental load. For example, when a battery module is disposed of, it is preferable that each of the members constituting the battery module be separable. In addition, in a case where a battery module has a plurality of battery cells, it is preferable that partial replacement of the battery cells be possible. When the members constituting a battery module are adhered to each other as described above, disassembly of the battery module is not easy, and separation at the time of disposal and maintenance, such as replacement of battery cells, are also not easy.

A need thus exists for a battery module that is easily disassembled as needed, while a battery cell and a heat exchange component are properly positioned.

### SUMMARY

In view of the above, a battery module includes at least one battery cell, a heat exchange member in which a flow path through which a heat medium flows is formed, and a holding member that holds a positional relationship between the battery cell and the heat exchange member, in which, assuming that a direction, in which the battery cell and the heat exchange member are arranged side by side, is an arrangement direction and a surface of the battery cell facing the heat exchange member side is a heat exchange member side facing surface: the heat exchange member side facing surface has a shape having unevenness in the arrangement direction; and the heat exchange member has higher flexibility than the heat exchange member side facing surface, and is pressed toward the heat exchange member side facing surface side by the holding member in a state of being deformed following the shape of the heat exchange member side facing surface.

According to this configuration, the heat exchange member has higher flexibility than the heat exchange member side facing surface of the battery cell, and is pressed toward the heat exchange member side facing surface side so as to be deformed following the shape of the heat exchange member side facing surface. Therefore, even if there is an error in the position or shape of the battery cell, it is easy to increase the heat transfer efficiency between the battery cell and the heat exchange member, while the positional relationship between the battery cell and the heat exchange member is defined. In addition, a configuration is adopted in which the heat exchange member is pressed toward the heat exchange member side facing surface side by the holding member such that the heat exchange member is in a state of being deformed following the shape of the heat exchange member side facing surface, so that it is possible to reduce the need to interpose an adhesive, a filler, or the like between the battery cell and the heat exchange member. Therefore, it is easy to disassemble the battery module. As described above, it is possible to provide a battery module that is easily disassembled as needed while a battery cell and a heat exchange component are properly positioned.

The technical features of the battery module described above are also applicable to a method for manufacturing a battery module. Representative aspects thereof will be exemplified below. For example, the method for manufacturing a battery module can include various steps having the features of the battery module described above. Naturally, the method for manufacturing a battery module can also exhibit the functions and effects of the battery module described above. In addition, as preferred aspects of the battery module, various additional features exemplified in the following description of the embodiments can also be incorporated in the method for manufacturing a battery module, and the method for manufacturing a battery module can also exhibit functions and effects corresponding to each of the additional features.

As one preferred aspect, the method for manufacturing a battery module is a method for manufacturing a battery module including at least one battery cell, a heat exchange member in which a flow path through which a heat medium flows is formed, and a holding member that holds a positional relationship between the battery cell and the heat exchange member, the method including, assuming that a direction, in which the battery cell and the heat exchange member are arranged side by side, is an arrangement direction and a surface of the battery cell facing the heat exchange member side is a heat exchange member side facing surface: a step of disposing side by side the battery cell and the heat exchange member having higher flexibility than the heat exchange member side facing surface in the arrangement direction in a state where the heat exchange member side facing surface has a shape having unevenness in the arrangement direction; and a step of pressing the heat exchange member toward the heat exchange member side facing surface side by the holding member such that the heat exchange member is in a state of being deformed following the shape of the heat exchange member side facing surface.

Further features and advantages of the battery module and the method for manufacturing a battery module will become apparent from the following description of exemplary and non-limiting embodiments described with reference to the drawings.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view of a first example of a battery module.
Fig. 2 is a perspective view of the first example of the battery module.
Fig. 3 is a cross-sectional view of the first example of the battery module (cross-sectional view taken along line III-III in Fig. 2).
Fig. 4 is a perspective view of a heat exchange member.
Fig. 5 is a cross-sectional view of the heat exchange member (cross-sectional view taken along line V-V in Fig. 4).
Fig. 6 is an exploded cross-sectional view of a second example of the battery module.
Fig. 7 is a cross-sectional view of the second example of the battery module.

### DETAILED DESCRIPTION

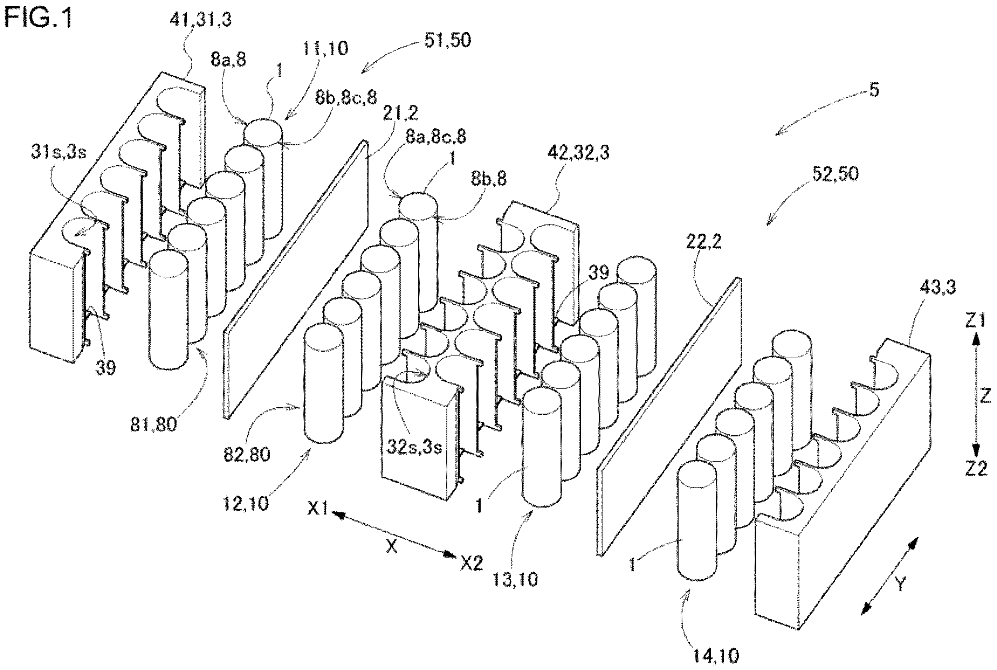

Hereinafter, embodiments of a battery module will be described with reference to the drawings. A battery module 5 of the present embodiment is preferably used as a DC power supply that supplies electric power to a rotating electrical machine (traction motor) serving as a driving power source of a vehicle like an electric vehicle, a hybrid vehicle, or the like, but the application is not limited to such a vehicle. As illustrated in Fig. 1 and the like, the battery module 5 includes at least one battery cell 1 and a heat exchange member 2. Hereinafter, the battery module 5 will be described by exemplifying a plurality of modes. In the present specification, a configuration is exemplified in all the exemplified modes, in which the battery module 5 includes a plurality of the battery cells 1 in order to increase the storage capacity of the battery module 5 or enable a high output voltage. However, the battery module 5 may be configured to include a single battery cell 1.

The battery cell 1 may contain a relatively expensive raw material or a raw material having a large environmental load when disposed of. For this reason, it is often required to take out the raw material from the used battery module 5 after being replaced due to deterioration of performance. In addition, it is preferable in consideration of reduction in environmental load after disposal that components (e.g., the heat exchange member 2, a holding member 3 to be described later, and the like) other than the battery cells 1 in the battery module 5 be also properly separated. In a case where the battery module 5 includes a plurality of the battery cells 1, the performance of the battery module 5 may be recovered by replacing the battery cell 1 with deteriorated performance. That is, the battery module 5 is required to take into account environmental friendliness, economic efficiency, and maintainability. On the other hand, assuming a case where the battery module 5 is mounted on an automobile, it is required that each component constituting the battery module 5 can maintain a properly positioned state, including the relationship between the battery cells 1 and the heat exchange member 2, even under an environment where vibration or the like occurs. The battery module 5 of the present embodiment is configured to be able to be easily disassembled as needed while the battery cell 1 and the heat exchange member 2 are properly positioned.

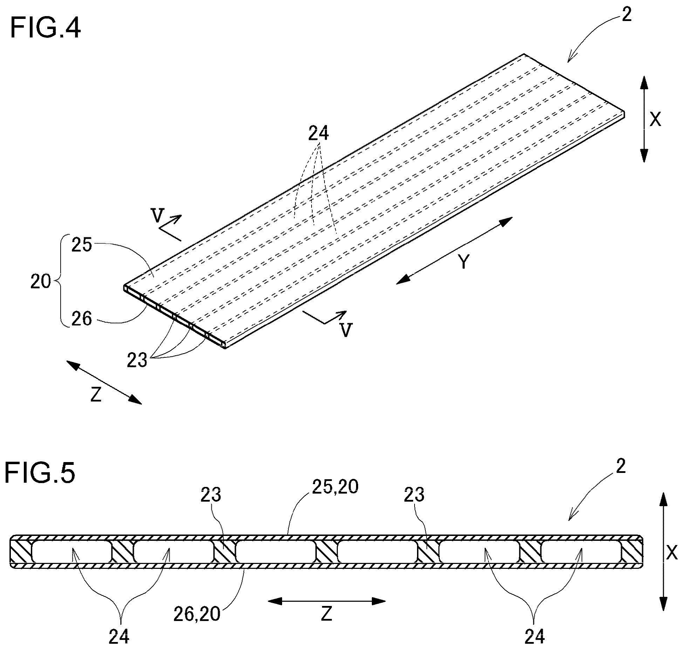

The battery module 5 of the present embodiment includes at least one battery cell 1, the heat exchange member 2 in which a flow path 24 (see Figs. 4 and 5) through which a heat medium flows is formed, and the holding member 3 that holds a positional relationship between the battery cell 1 and the heat exchange member 2. As the heat medium, a fluid, such as cooling water, oil, or a refrigerant for an air conditioner, can be used. Although details will be described later, the holding member 3 does not adhere the battery cell 1 to the heat exchange member 2 like an adhesive. Therefore, the battery module 5 can be easily disassembled into the battery cell 1, the heat exchange member 2, and the holding member 3.

In describing the configuration of the battery module 5, directions are firstly defined. Here, a direction, in which the battery cell 1 and the heat exchange member 2 are arranged side by side, is defined as an arrangement direction X, one side in the arrangement direction X being referred to as an arrangement direction first side X1, and the other side in the arrangement direction X being referred to as an arrangement direction second side X2. In addition, a direction orthogonal to the arrangement direction X is referred to as a width direction Y, as illustrated in Fig. 1 and the like. The width direction Y is a direction in which, in a case where the battery module 5 includes a plurality of the battery cells 1, the plurality of the battery cells 1 are arrayed, and can also be referred to as a "cell array direction". In addition, a direction orthogonal to the arrangement direction X and the width direction Y (cell array direction) is referred to as an up-down direction Z for convenience. For example, in a case where the battery module 5 is mounted on a vehicle, a direction along the vertical direction in a standard posture (posture in which the vehicle is positioned on a horizontal plane) is the up-down direction Z, the upper direction being referred to as an upper side Z1, and the lower direction being referred to as a lower side Z2. Naturally, this is a direction for convenience, and in the case where the battery module 5 is mounted on a vehicle, the vertical direction and the up-down direction Z may not coincide with each other. In the present embodiment, the battery cell 1 having a cylindrical shape is exemplified, as illustrated in Fig. 1 and the like. In this case, the up-down direction Z coincides with the height direction and the extending direction of the columnar battery cell 1. The columnar battery cell 1 is not limited to a cylindrical shape, and the bottom surface thereof may also have a polygonal shape, such as a triangular prism shape, a quadrangular prism shape, a hexagonal prism shape, or an octagonal shape.

Here, a plurality of the battery cells 1 disposed to be arranged side by side along a direction (width direction Y, cell array direction) orthogonal to the arrangement direction X is referred to as a cell array 10 (battery cell array). Here, an example is given in which one cell array 10 is configured with the battery cells 1 arrayed in a single row along the width direction Y, but one cell array 10 may be formed with the battery cells 1 arrayed in a plurality of rows (e.g., two rows). For example, one cell array 10 may be configured to include two sets each including a plurality of the battery cells 1 arranged in a single row along the width direction Y, in which the two sets are disposed to be shifted in the width direction Y, and the battery cells 1 are disposed in two rows in a staggered manner in the up-down direction Z.

As illustrated in Fig. 1, the battery cell 1 (cell array 10), the heat exchange member 2, and the holding member 3 are disposed side by side along the arrangement direction X. The battery cell 1 (cell array 10) whose position is fixed in the battery module 5 has facing surfaces 8 each facing any member constituting the battery module 5, on both the arrangement direction first side X1 and the arrangement direction second side X2. Here, of the facing surfaces 8, a surface of the battery cell 1 facing the arrangement direction first side X1 is referred to as a first side facing surface 8a, and a surface of the battery cell 1 facing the arrangement direction second side X2 is referred to as a second side facing surface 8b. In addition, of the facing surfaces 8, a surface of the battery cell 1 facing the heat exchange member 2 side is referred to as a heat exchange member side facing surface 8c. The heat exchange member side facing surface 8c does not necessarily have to face the heat exchange member 2 directly, but may do so with another member (another battery cell 1 or cell array 10, a heat conductive member to be described later, or the like) interposed therebetween. The first side facing surface 8a and the second side facing surface 8b can serve as the heat exchange member side facing surface 8c depending on the placement position of the battery cell 1 (cell array 10).

The heat exchange member side facing surface 8c has a shape having unevenness in the arrangement direction X, and the protrusion amounts in the arrangement direction X vary depending on the positions in the width direction Y. Even in a case where the battery cell 1 has a triangular shape or a quadrangular prism shape, and when a side (corner portion) between two adjacent side surfaces, not a side surface (surface other than the bottom surface of the columnar shape), is disposed to face the arrangement direction X, the heat exchange member side facing surface 8c has a shape having unevenness in the arrangement direction X. In addition, even in a case where the battery cell 1, having a triangular shape or a quadrangular prism shape, is disposed such that the side surface thereof faces the arrangement direction X, and when the side (corner portion) is chamfered or when a groove, a protrusion, or the like is provided on the side surface, it can be said that the heat exchange member side facing surface 8c has a shape having unevenness. In the present embodiment, the facing surface 8 that is not the heat exchange member side facing surface 8c also has a shape having unevenness in the arrangement direction X. That is, the first side facing surface 8a and the second side facing surface 8b have shapes each having unevenness in the arrangement direction X, regardless of whether or not the first side facing surface 8a and the second side facing surface 8b are the heat exchange member side facing surface 8c.

When a pressing force in the arrangement direction X can be sufficiently secured, or when a sufficient frictional force can be secured between a member adjacent to the battery cell 1 (cell array 10) in the arrangement direction X and the battery cell 1 (cell array 10), the heat exchange member side facing surface 8c may not have unevenness in the arrangement direction X. Similarly, the first side facing surface 8a and the second side facing surface 8b may not have unevenness in the arrangement direction X, regardless of whether or not the first side facing surface 8a and the second side facing surface 8b are the heat exchange member side facing surface 8c. For example, in a case where the battery cell 1 has a triangular shape or a quadrangular prism shape, the side surface may be disposed to face the arrangement direction X.

In the cell array 10, there are as many facing surfaces 8 as the number of the battery cells 1 arranged in the width direction Y (cell array direction). Although reference numerals are omitted in the drawings, it can be said that the cell array 10 includes a "facing surface group" that is a set of the facing surfaces 8 of a plurality of the battery cells 1. Although reference numerals are similarly omitted in the drawings, a set of the surfaces of the cell array 10 facing the arrangement direction first side X1, of the facing surface group, can be referred to as a "first side facing surface group", and a set of the surfaces of the cell array 10 facing the arrangement direction second side X2 can be referred to as a "second side facing surface group". In addition, of the "facing surface group", a set of the "heat exchange member side facing surfaces 8c" is referred to as a "heat exchange member side facing surface group 80". That is, the surfaces of the cell array 10 facing the heat exchange member 2 side are referred to as a "heat exchange member side facing surface group 80". The first side facing surface group and the second side facing surface group can serve as the heat exchange member side facing surface group 80 depending on the placement position of the cell array 10. The heat exchange member side facing surface group 80 has a shape having unevenness in the arrangement direction X, and the protrusion amounts in the arrangement direction X vary depending on the positions in the width direction Y. In the present embodiment, the facing surface group, which is not the heat exchange member side facing surface group 80, also has a shape having unevenness in the arrangement direction X. That is, the first side facing surface group and the second side facing surface group also have shapes having unevenness in the arrangement direction X, regardless of whether or not the first side facing surface group and the second side facing surface group are the heat exchange member side facing surface group 80.

In a case where the battery cells 1 are disposed with gaps in the width direction Y to form the cell array 10, the facing surface 8 of the battery cell 1 and the gap can collectively be considered as the "facing surface group". Therefore, it can be considered that the facing surface group of the cell array 10, in which a plurality of the battery cells 1 each having a triangular shape or a quadrangular prism shape having no groove or protrusion on its side surface are disposed with the side surfaces facing the arrangement direction X and with gaps in the width direction Y, also has a shape having unevenness.

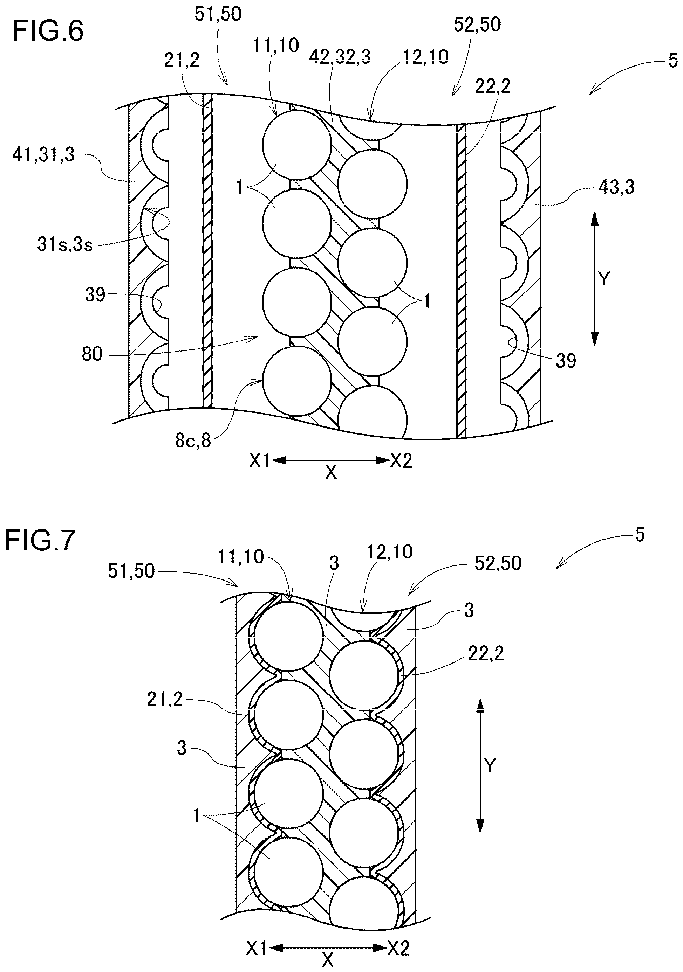

Although details will be described later, in a case where one cell array 10 (first cell array 11 or second cell array 12) faces one heat exchange member 2 in the arrangement direction X as illustrated in Figs. 6 and 7, one of the two facing surface groups of the cell array 10 serves as the "heat exchange member side facing surface group 80". In a case where two cell arrays 10 (a set of the first cell array 11 and the second cell array 12 or a set of a third cell array 13 and a fourth cell array 14) face one heat exchange member 2 as illustrated in Figs. 1 to 3, one of the two facing surface groups of each cell array 10 serves as the "heat exchange member side facing surface group 80". For example, when, in the set of the first cell array 11 and the second cell array 12, the heat exchange member side facing surface groups 80 of the respective cell arrays 10 are distinguished, the heat exchange member side facing surface group 80 of the first cell array 11 is referred to as a "heat exchange member side first facing surface group 81", and the heat exchange member side facing surface group 80 of the second cell array 12 is referred to as a "heat exchange member side second facing surface group 82".

The heat exchange member 2 has higher flexibility than the heat exchange member side facing surface 8c. The hardness of the heat exchange member 2 (hardness of an outer wall portion 20 to be described later) is, for example, 20 degrees to 80 degrees, and more preferably 40 degrees to 70 degrees. Therefore, the heat exchange member 2 is pressed toward the heat exchange member side facing surface 8c (heat exchange member side facing surface group 80) side by the holding member 3 in a state of being deformed following the shape of the heat exchange member side facing surface 8c (heat exchange member side facing surface group 80).

The battery module 5, including at least one battery cell 1, the heat exchange member 2 in which a flow path through which the heat medium flows is formed, and the holding member 3 that holds the positional relationship between the battery cell 1 and the heat exchange member 2, can be manufactured by the following procedure. In a first step, the battery cells 1 and the heat exchange member 2 having higher flexibility than the heat exchange member side facing surface (8c) are disposed side by side in the arrangement direction X in a state where the heat exchange member side facing surface 8c has a shape having unevenness in the arrangement direction X. In a second step, the heat exchange member 2 is pressed toward the heat exchange member side facing surface 8c side by the holding member 3 such that the heat exchange member 2 is in a state of being deformed following the shape of the heat exchange member side facing surface 8c. When the battery module 5 including the cell array 10 is manufactured, it is fine to configure the cell array 10 by arraying a plurality of the battery cells 1 in the width direction (array direction) in the first step, or preferably in a step prior to the first step.

Since the heat exchange member 2 has higher flexibility than the heat exchange member side facing surface 8c of the battery cell 1, and is pressed toward the heat exchange member side facing surface 8c side so as to be deformed following the shape of the heat exchange member side facing surface 8c, it is easy to increase the heat transfer efficiency between the battery cell 1 and the heat exchange member 2 while the positional relationship between the battery cell 1 and the heat exchange member 2 is defined, even if there is an error in the position or shape of the battery cell 1. In addition, since a configuration is adopted in which the heat exchange member 2 is pressed toward the heat exchange member side facing surface 8c side by the holding member 3 such that the heat exchange member 2 is in a state of being deformed following the shape of the heat exchange member side facing surface 8c, it is possible to reduce the need to interpose an adhesive, a filler, or the like between the battery cell 1 and the heat exchange member 2. Therefore, when the battery module 5 needs to be disassembled, the battery cell 1, the heat exchange member 2, and the holding member 3 can be easily separated.

As illustrated in Fig. 1 and the like, the holding member 3 includes a first holding member 31 disposed on the arrangement direction first side X1 with respect to the battery cell 1 (cell array 10) and the heat exchange member 2, and a second holding member 32 disposed on the arrangement direction second side X2 with respect to the battery cell 1 (cell array 10) and the heat exchange member 2. The battery cell 1 (cell array 10) and the heat exchange member 2 are held in a state of being sandwiched in the arrangement direction X by the first holding member 31 and the second holding member 32.

By sandwiching and holding the battery cell 1 and the heat exchange member 2 in the arrangement direction X by the first holding member 31 and the second holding member 32, the placement positions of the members constituting the battery module 5 are properly maintained with a pressing force in the arrangement direction X or a frictional force between the members adjacent to each other in the arrangement direction X. Therefore, it is possible to reduce the need to interpose an adhesive, a filler, or the like between the battery cell 1 and the heat exchange member 2, between the battery cell 1 and any holding member 3, and between the heat exchange member 2 and any holding member 3. Therefore, it is also easy to disassemble the battery module 5.

It is preferable that the heat exchange member 2 be made of, for example, silicone rubber or elastomer, and have an electrical insulating property. The entire heat exchange member 2 may have an insulating property, or a part of the heat exchange member 2, for example, only the surface of the heat exchange member 2, may be configured to have an electrical insulating property. When the heat exchange member 2 has an electrical insulating property, it is not necessary to separately dispose a member for securing electrical insulating property between the battery cell 1 and the heat exchange member 2, whereby a simple configuration can be realized. In addition, when another insulating member is disposed, it is possible to reduce the risk that the heat conductivity between the battery cell 1 and the heat exchange member 2 may be impaired, and the heat transfer efficiency between the battery cell 1 and the heat exchange member 2 can be easily increased. It is preferable that the heat exchange member 2 have an insulating property, but this does not prevent the heat exchange member 2 and the battery cell 1 (cell array 10) from being disposed in the arrangement direction X with another member (heat transfer sheet or the like) having high heat conductivity interposed therebetween.

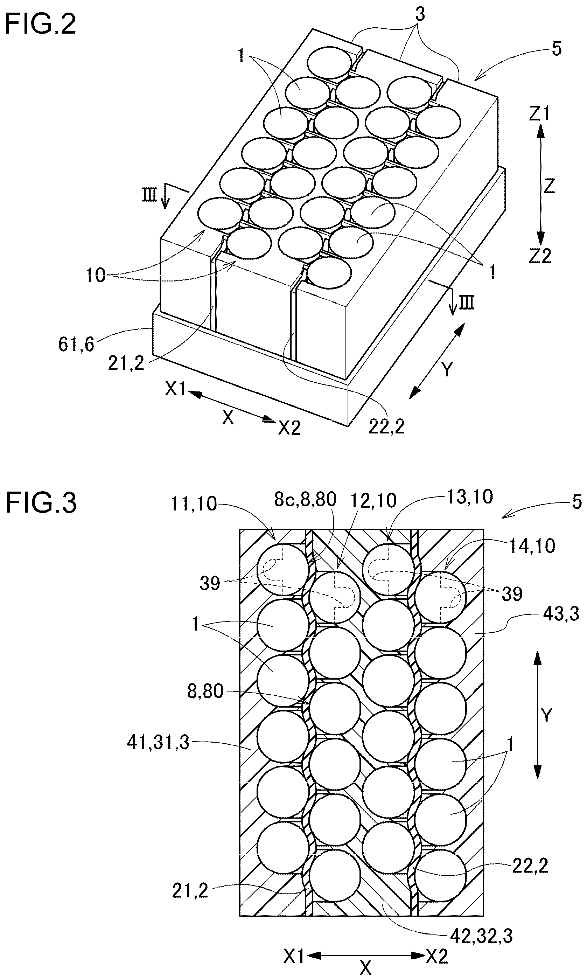

The basic concept of the battery module 5 of the present embodiment has been described above. Hereinafter, a description will be given with reference to specific configuration examples. Figs. 1 to 3 illustrate a first example of the battery module 5. Fig. 3 is a cross-sectional view taken along line III-III in Fig. 2. Figs. 6 and 7 illustrate a second example of the battery module 5. In the second example, a perspective view and an exploded perspective view are omitted, but an exploded cross-sectional view and a cross-sectional view are shown. Figs. 4 and 5 illustrate a configuration example of the heat exchange member 2 common to the first and second examples. Fig. 5 is a cross-sectional view taken along line V-V in Fig. 4.

The configuration of the heat exchange member 2 having flexibility will be first described because it is common to both the first example and the second example. As illustrated in Fig. 4, the heat exchange member 2 is a plate-like member. As illustrated in Figs. 4 and 5, the heat exchange member 2, in which the flow path 24 through which the heat medium flows is formed, includes a pair of outer wall portions 20 (first outer wall portion 25, second outer wall portion 26) disposed to face each other in the arrangement direction X, and a partition wall portion 23 disposed in a region sandwiched between the pair of outer wall portions 20 and having higher hardness than the pair of outer wall portions 20. The flow path 24 is formed in a space where the pair of outer wall portions 20 face each other in a state of being partitioned by the partition wall portion 23. The pair of outer wall portions 20 is softer and has higher flexibility than the partition wall portion 23. Both the outer wall portion 20 and the partition wall portion 23 have higher flexibility than the heat exchange member side facing surface 8c, and the heat exchange member 2 is deformed as a whole following the uneven shape of the heat exchange member side facing surface 8c. However, the outer wall portion 20 has higher followability to the uneven shape than the partition wall portion 23, and even if the heat exchange member 2 is deformed as a whole, the flow path 24 is hardly crushed and closed in the arrangement direction X, whereby the flow path 24 through which the heat medium flows can be secured.

An inlet and an outlet for the heat medium are defined in the flow path 24 partitioned by the partition wall portion 23. In the present embodiment, the heat exchange member 2 includes a plurality of the partition wall portions 23, and a plurality of independent flow paths 24 are formed in the heat exchange member 2. That is, as illustrated in the drawing, the plurality of the flow paths 24 arranged in parallel are disposed in a direction (here, width direction Y) intersecting the up-down direction Z that is the longitudinal direction of the columnar battery cell 1.

In common to the first example and the second example, the battery module 5 includes the cell array 10. However, the battery module 5 may be configured to include a single battery cell 1 instead of the cell array 10, as described above. In common to the first example and the second example, the battery module 5 is configured to include a plurality of (here, two) unit module portions 50 each including one heat exchange member 2. However, the battery module 5 may be configured to include a single unit module portion 50. In a case where one unit module portion 50 is configured to include one battery cell 1 and the battery module 5 is configured to include a single unit module portion 50, the battery module 5 has a minimum configuration in which it is configured to include one battery cell 1.

Hereinafter, the battery module 5 of the first example will be described. As illustrated in Fig. 1, the battery module 5 of the first example is configured to include four cell arrays 10 (first cell array 11, second cell array 12, third cell array 13, fourth cell array 14), two heat exchange members 2 (first heat exchange member 21, second heat exchange member 22), and three holding members 3 (first side holder 41, intermediate holder 42, second side holder 43). Specifically, the battery module 5 of the first example includes, from the arrangement direction first side X1 toward the arrangement direction second side X2, the first side holder 41, the first cell array 11, the first heat exchange member 21, the second cell array 12, the intermediate holder 42, the third cell array 13, the second heat exchange member 22, the fourth cell array 14, and the second side holder 43.

As described above, the battery module 5 of the first example is configured to include two unit module portions 50. A first unit module portion 51, which is one of the unit module portions 50, includes the first side holder 41, the first cell array 11, the first heat exchange member 21, the second cell array 12, and the intermediate holder 42. A second unit module portion 52, which is the other of the unit module portions 50, includes the intermediate holder 42, the third cell array 13, the second heat exchange member 22, the fourth cell array 14, and the second side holder 43. The intermediate holder 42 is commonly used in the first unit module portion 51 and the second unit module portion 52. However, the intermediate holder 42 may include different members (e.g., first intermediate holder, second intermediate holder), which may be used in the respective unit module portions 50. That is, the battery module 5 may be formed by connecting a plurality of the unit module portions 50 that can be used independently. The connection direction may be any direction of the arrangement direction X, the width direction Y, and the up-down direction Z.

One unit module portion 50 of the battery module 5 of the first example includes at least two cell arrays 10 (battery cell arrays). That is, each of the first unit module portion 51 and the second unit module portion 52 includes at least two cell arrays 10 (battery cell arrays). In the first unit module portion 51, the heat exchange member 2 (first heat exchange member 21) is disposed between the first battery cell array (first cell array 11), which is one of the two cell arrays 10, and the second battery cell array (second cell array 12), which is the other thereof, in the arrangement direction X. In the second unit module portion 52, the heat exchange member 2 (second heat exchange member 22) is disposed between the first battery cell array (third cell array 13), which is one of the two cell arrays 10, and the second battery cell array (fourth cell array 14), which is the other thereof, in the arrangement direction X. Note that, as for the reference numerals, those for the first unit module portion 51 are used as representative, and some reference numerals are omitted for the second unit module portion 52, for the sake of simplicity.

In addition, the first battery cell arrays are disposed on the arrangement direction first side X1 with respect to the second battery cell arrays, respectively. In the first unit module portion 51, the first cell array 11 (first battery cell array) is disposed on the arrangement direction first side X1 with respect to the second cell array 12 (second battery cell array). The first cell array 11 and the second cell array 12 are disposed with an offset in the width direction Y, and the plurality of the battery cells 1 are arrayed in a staggered manner as viewed in the up-down direction Z. When the plurality of the battery cells 1 are disposed in a staggered manner, it is easy to suppress an increase in the dimension, in the arrangement direction X, of the battery modules 5. In the second unit module portion 52, the third cell array 13 (first battery cell array) is disposed on the arrangement direction first side X1 with respect to the fourth cell array 14 (second battery cell array). The third cell array 13 and the fourth cell array 14 are also disposed with an offset in the width direction Y, and the plurality of the battery cells 1 are arrayed in a staggered manner as viewed in the up-down direction Z.

In addition, each unit module portion 50 includes, as the holding member 3, the first holding member 31 disposed on the arrangement direction first side X1 with respect to the first battery cell array, and the second holding member 32 disposed on the arrangement direction second side X2 with respect to the second battery cell array. In the first unit module portion 51, the first side holder 41 corresponds to the first holding member 31, and the intermediate holder 42 corresponds to the second holding member 32. That is, the first unit module portion 51 includes the first side holder 41 (first holding member 31) disposed on the arrangement direction first side X1 with respect to the first cell array 11, and the intermediate holder 42 (second holding member 32) disposed on the arrangement direction second side X2 with respect to the second cell array 12. In the second unit module portion 52, the intermediate holder 42 corresponds to the first holding member 31, and the second side holder 43 corresponds to the second holding member 32. That is, the second unit module portion 52 includes the intermediate holder 42 (first holding member 31) disposed on the arrangement direction first side X1 with respect to the third cell array 13, and the second side holder 43 (second holding member 32) disposed on the arrangement direction second side X2 with respect to the fourth cell array 14.

As described above, a set of the heat exchange member side facing surfaces 8c of the plurality of the battery cells 1 constituting the first battery cell array (first cell array 11, third cell array 13) is the heat exchange member side first facing surface group 81, and a set of the heat exchange member side facing surfaces 8c of the plurality of the battery cells 1 constituting the second battery cell array (second cell array 12, fourth cell array 14) is the heat exchange member side second facing surface group 82. The heat exchange member side first facing surface group 81 and the heat exchange member side second facing surface group 82 have shapes each having unevenness in the arrangement direction X. As illustrated in Figs. 2 and 3, the positional relationship between the first holding member 31 and the second holding member 32 in the arrangement direction X is fixed. As is apparent from the comparison between the heat exchange member 2 illustrated in Fig. 1 and the heat exchange member 2 illustrated in Figs. 2 and 3, the heat exchange member 2 (first heat exchange member 21, second heat exchange member 22) is sandwiched between the heat exchange member side first facing surface group 81 and the heat exchange member side second facing surface group 82 in a state of being deformed following the shapes of the heat exchange member side first facing surface group 81 and the heat exchange member side second facing surface group 82.

As illustrated in Fig. 1 and the like, a support surface 3s, which is a surface of the holding member 3 facing the arrangement direction X, also has unevenness formed to have different protrusion amounts in the arrangement direction X. Specifically, a first support surface 31s, which is a surface of the first holding member 31 facing the arrangement direction second side X2, has unevenness in the arrangement direction X corresponding to the shape of the first side facing surface 8a ("first side facing surface group" in the case of the cell array 10). In addition, a second support surface 32s, which is a surface of the second holding member 32 facing the arrangement direction first side X1, has unevenness in the arrangement direction X corresponding to the shape of the second side facing surface 8b ("second side facing surface group" in the case of the cell array 10).

In the first example illustrated in Figs. 1 to 3, and in the first unit module portion 51, the support surface 3s of the first side holder 41 (first holding member 31) facing the arrangement direction second side X2 is the first support surface 31s having unevenness in the arrangement direction X, and the support surface 3s of the intermediate holder 42 (second holding member 32) facing the arrangement direction first side X1 is the second support surface 32s having unevenness in the arrangement direction X. In the second unit module portion 52, the support surface 3s of the intermediate holder 42 (first holding member 31) facing the arrangement direction second side X2 is the first support surface 31s having unevenness in the arrangement direction X, and the support surface 3s of the second side holder 43 (second holding member 32) facing the arrangement direction first side X1 is the second support surface 32s having unevenness in the arrangement direction X, although reference numerals are omitted in the drawings for the sake of simplicity.

The first side holder 41, the intermediate holder 42, and the second side holder 43 (appropriately, collectively referred to as a "holder"), corresponding to the holding member 3, include a wall portion surrounding the periphery of the battery cell 1. With the shape of the wall portion changing along the width direction Y depending on the shape of the battery cell 1, unevenness is formed on the support surface 3s. That is, the first support surface 31s is provided to cover the arrangement direction first side X1 of the battery cell 1, and the second support surface 32s is provided to cover the arrangement direction second side X2 of the battery cell 1. In addition, the first side holder 41, the intermediate holder 42, and the second side holder 43 include a bottom portion 39 that supports the battery cell 1 on the lower side Z2 in the up-down direction Z (see Figs. 1 and 3). When the battery cell 1 is placed on the bottom portion 39 and the periphery of the battery cell 1 is surrounded by the wall portion, the battery cell 1 can be housed in the holder.

In the present embodiment, the support surface 3s of the holding member 3 has an uneven shape, and the holding member 3 is configured to be able to house the battery cell 1, as described above. However, as long as the holding member 3 can hold the battery cell 1, it is not limited to the configuration in which the support surface 3s has an uneven shape, but the support surface may be flat.

In the first unit module portion 51, the heat exchange member 2 (first heat exchange member 21) is disposed between the battery cell 1 (first cell array 11) housed in the first side holder 41 (first holding member 31) and the battery cell 1 (second cell array 12) housed in the intermediate holder 42 (second holding member 32) in the arrangement direction X. In the second unit module portion 52, the heat exchange member 2 (second heat exchange member 22) is disposed between the battery cell 1 (third cell array 13) housed in the intermediate holder 42 (first holding member 31) and the battery cell 1 (fourth cell array 14) housed in the second side holder 43 (second holding member 32) in the arrangement direction X.

That is, it can be said that, in the first unit module portion 51 of the battery module 5, the heat exchange member 2 (first heat exchange member 21) is disposed between the battery cell 1 (battery cell array (e.g., second cell array 12)) and the first holding member 31 (e.g., first side holder 41) in the arrangement direction X. In the mode illustrated in Figs. 1 to 3, the battery cell 1 (battery cell array (here, first cell array 11)) is further disposed between the first holding member 31 (first side holder 41) and the heat exchange member 2 (first heat exchange member 21). In addition, it can be said that, also in the second unit module portion 52 of the battery module 5, the heat exchange member 2 (second heat exchange member 22) is similarly disposed between the battery cell 1 (battery cell array (e.g., fourth cell array 14)) and the first holding member 31 (e.g., intermediate holder 42) in the arrangement direction X. In the mode illustrated in Figs. 1 to 3, the battery cell 1 (battery cell array (here, third cell array 13)) is further disposed between the first holding member 31 (intermediate holder 42) and the heat exchange member 2 (second heat exchange member 22). The heat exchange member 2 has higher flexibility than the first side facing surface 8a (first side facing surface group), and is pressed toward the first side facing surface 8a (first side facing surface group) side in a state of being deformed following the shape of the first side facing surface 8a (first side facing surface group).

In the above description, the arrangement direction first side X1 and the arrangement direction second side X2 are fixed to the illustrated directions for explanation purposes. However, it may be considered that the first unit module portion 51 and the second unit module portion 52 are configured in such a manner that their placements in the arrangement direction X are reversed with respect to each other, with the intermediate holder 42 serving as a symmetry axis. That is, the second unit module portion 52 can also be said to have a configuration in which the arrangement direction first side X1 and the arrangement direction second side X2 in the first unit module portion 51 are interchanged. As described above, one side in the arrangement direction X is the arrangement direction first side X1 and the other side in the arrangement direction X is the arrangement direction second side X2, and thus there is no problem even if the arrangement direction first side X1 and the arrangement direction second side X2 are interchanged in the first unit module portion 51 and the second unit module portion 52. In this case, in the second unit module portion 52, the second side holder 43 corresponds to the first holding member 31, and the intermediate holder 42 corresponds to the second holding member 32.

As illustrated in Fig. 2, the battery module 5 includes a fixing member 6 that fixes the positional relationships between the holding members 3 in the arrangement direction X. When the battery module 5 is manufactured, a third step of fixing the positional relationships between the holding members 3 in the arrangement direction X by the fixing member 6 is performed after the second step. Although only a first fixing member 61 disposed on the lower side Z2 in the up-down direction Z is illustrated in Fig. 2, it is preferable that the same fixing member 6 (second fixing member) be also disposed on the upper side Z1 in the up-down direction Z. The fixing member 6 fixes the relative positions, in the arrangement direction X, of the battery cell 1 (cell array 10), the heat exchange member 2, and the holding member 3, which are main components constituting the battery module 5. Preferably, the fixing member 6 also fixes the positions, in the width direction Y, of the main components of the battery module 5. More preferably, the fixing member 6 also fixes the positions, in the up-down direction Z, of the main components of the battery module 5. Note that the fixing member 6 may be a belt-like member that fixes the relative positions, in the arrangement direction X, of the main components described above, the positions being between the upper side Z1 and the lower side Z2 of the battery module 5. Note that, although not illustrated in Fig. 6 and the like, regarding the fixing member 6, the same applies to a battery module 5 of the second example to be described later.

In terms of the unit module portion 50, it can be said that one unit module portion 50 includes the fixing member 6 that fixes the positional relationship between the first holding member 31 and the second holding member 32 in the arrangement direction X. In the mode illustrated in Figs. 1 to 3, the first unit module portion 51 includes the fixing member 6 that fixes the positional relationship between the first side holder 41 and the intermediate holder 42 in the arrangement direction X, and the second unit module portion 52 includes the fixing member 6 that fixes the positional relationship between the intermediate holder 42 and the second side holder 43 in the arrangement direction X. The fixing member 6 in the first unit module portion 51 and the fixing member 6 in the second unit module portion 52 are formed of a common member. It can be said that the battery module 5 including the first unit module portion 51 and the second unit module portion 52 includes the fixing member 6 that fixes the positional relationship between the first holding member 31 (first side holder 41, intermediate holder 42) and the second holding member 32 (intermediate holder 42 and second side holder 43) in the arrangement direction X. That is, in the third step performed after the second step, the positional relationship between the first holding member 31 and the second holding member 32 in the arrangement direction X is fixed by the fixing member 6.

Hereinafter, the battery module 5 of the second example will be described. Matters common to the first example (functional definitions of cell array 10, unit module portion 50, and facing surface 8, fixing member 6, and the like) can be easily understood from the above description, and thus reference numerals in the drawings and description are appropriately omitted. As illustrated in Figs. 6 and 7, the battery module 5 of the second example is configured to include two cell arrays 10 (first cell array 11, second cell array 12), two heat exchange members 2 (first heat exchange member 21, second heat exchange member 22), and three holding members 3 (first side holder 41, intermediate holder 42, second side holder 43). Specifically, the battery module 5 of the second example includes, from the arrangement direction first side X1 toward the arrangement direction second side X2, the first side holder 41, the first heat exchange member 21, the first cell array 11, the intermediate holder 42, the second cell array 12, the second heat exchange member 22, and the second side holder 43.

The battery module 5 of the second example also includes two unit module portions 50 (first unit module portion 51, second unit module portion 52). As illustrated in Fig. 6, the first unit module portion 51 includes the first side holder 41, the first heat exchange member 21, the first cell array 11, and the intermediate holder 42. The second unit module portion 52 includes the intermediate holder 42, the second cell array 12, the second heat exchange member 22, and the second side holder 43. The intermediate holder 42 is commonly used in the first unit module portion 51 and the second unit module portion 52. However, the intermediate holder 42 may include different members (e.g., first intermediate holder, second intermediate holder), which may be used in the respective unit module portions 50. Similarly to the battery module 5 of the first example, the battery module 5 of the second example may also be configured to include at least one unit module portion 50.

One unit module portion 50 of the battery module 5 of the second example includes at least one cell array 10 (battery cell array). The unit module portion 50 includes, as the holding member 3, a first holding member 31 disposed on the arrangement direction first side X1 with respect to the cell array 10, and a second holding member 32 disposed on the arrangement direction second side X2 with respect to the cell array 10. The positional relationship between the first holding member 31 and the second holding member 32 in the arrangement direction X is fixed, and the heat exchange member 2 is disposed between the cell array 10 and the first holding member 31 in the arrangement direction X. A support surface 3s, which is a surface of the first holding member 31 facing the heat exchange member 2 side, has a shape having unevenness in the arrangement direction X. In addition, a heat exchange member side facing surface group 80 of the cell array 10 has a shape having unevenness in the arrangement direction X. The heat exchange member 2 is sandwiched between the heat exchange member side facing surface group 80 and the support surface 3s in a state of being deformed following the shapes of the heat exchange member side facing surface group 80 and the support surface 3s.

In the first unit module portion 51 of the battery module 5 of the second example having the two unit module portions 50, the first side holder 41 corresponds to the first holding member 31, and the intermediate holder 42 corresponds to the second holding member 32. The first unit module portion 51 includes, as the holding member 3, the first side holder 41 (first holding member 31) disposed on the arrangement direction first side X1 with respect to the first cell array 11, and the intermediate holder 42 (second holding member 32) disposed on the arrangement direction second side X2 with respect to the first cell array 11. The positional relationship between the first side holder 41 and the intermediate holder 42 in the arrangement direction X is fixed, and the first heat exchange member 21 is disposed between the first cell array 11 and the first side holder 41 in the arrangement direction X. The support surface 3s (first support surface 31s) of the first side holder 41 as the first holding member 31 has a shape having unevenness in the arrangement direction X. In addition, the heat exchange member side facing surface group 80 of the first cell array 11 has a shape having unevenness in the arrangement direction X. The first heat exchange member 21 is sandwiched between the heat exchange member side facing surface group 80 and the support surface 3s (first support surface 31s) in a state of being deformed following the shapes of the heat exchange member side facing surface group 80 and the support surface 3s (first support surface 31s).

Next, the second unit module portion 52 will be described, but as described above, it may be considered that the first unit module portion 51 and the second unit module portion 52 are configured in such a manner that their placements in the arrangement direction X are reversed with respect to each other, with the intermediate holder 42 serving as a symmetry axis. In the second example, a description will be given on the assumption that the second unit module portion 52 is configured in such a manner that its placement in the arrangement direction X is reversed with respect to the first unit module portion 51. That is, the second unit module portion 52 of the second example has a configuration in which the arrangement direction first side X1 and the arrangement direction second side X2 in the first unit module portion 51 are interchanged. As described above, one side in the arrangement direction X is the arrangement direction first side X1 and the other side in the arrangement direction X is the arrangement direction second side X2, and thus there is no problem even if the arrangement direction first side X1 and the arrangement direction second side X2 are interchanged in the first unit module portion 51 and the second unit module portion 52.

In the second unit module portion 52 of the second example in which the arrangement direction first side X1 and the arrangement direction second side X2 are interchanged, the second side holder 43 corresponds to the first holding member 31, and the intermediate holder 42 corresponds to the second holding member 32. The second unit module portion 52 includes, as the holding member 3, the second side holder 43 (first holding member 31) disposed on the arrangement direction first side X1 (arrangement direction second side X2 in the drawing) with respect to the second cell array 12, and the intermediate holder 42 (second holding member 32) disposed on the arrangement direction second side X2 (arrangement direction first side X1 in the drawing) with respect to the second cell array 12. The positional relationship between the second side holder 43 and the intermediate holder 42 in the arrangement direction X is fixed, and the second heat exchange member 22 is disposed between the second cell array 12 and the second side holder 43 in the arrangement direction X. The support surface 3s (first support surface 31s) of the second side holder 43 as the first holding member 31 has a shape having unevenness in the arrangement direction X. In addition, the heat exchange member side facing surface group 80 of the second cell array 12 has a shape having unevenness in the arrangement direction X. The second heat exchange member 22 is sandwiched between the heat exchange member side facing surface group 80 and the support surface 3s (first support surface 31s) in a state of being deformed following the shapes of the heat exchange member side facing surface group 80 and the support surface 3s (first support surface 31s).

In the above mode commonly described in the first example and the second example, the holding member 3 has been exemplified by the first side holder 41, the intermediate holder 42, and the second side holder 43, which are molded articles molded in advance. The molding material is preferably a synthetic resin or a foamable resin. In particular, a foamable resin is suitable for weight reduction in the battery module 5. In the present embodiment, the support surface 3s does not have flexibility, and even if a pressing force acts on the holding member 3, the shape of the support surface 3s does not change before and after the pressing. However, the holding member 3 is not limited to such a molded article (solid), but may be potting using a foaming agent having no adhesiveness. That is, a configuration may be adopted in which, when the support surface 3s has flexibility and a pressing force acts on the holding member 3, the shape of the support surface 3s changes before and after the pressing.

The above description exemplifies a mode in which the heat exchange member side facing surface 8c of the battery cell 1 (heat exchange member side facing surface group 80 of the cell array 10) and the heat exchange member 2 are in close contact with each other. Considering the heat exchange between the battery cell 1 and the heat exchange member 2, it is preferable that the battery cell 1 and the heat exchange member 2 be in close contact with each other without a gap therebetween. However, the heat exchange member side facing surface 8c (heat exchange member side facing surface group 80) and the heat exchange member 2 may partially be in contact with each other with gaps therebetween. According to the configuration of the present embodiment, even if such a gap (clearance) occurs, it is easy to reduce the distance, along the arrangement direction X, between the heat exchange member side facing surface 8c (heat exchange member side facing surface group 80) of the battery cell 1 (cell array 10) and the heat exchange member 2.

In the above description, a mode has been exemplified for explanation purposes, in which the heat exchange member side facing surface 8c of the battery cell 1 (heat exchange member side facing surface group 80 of the cell array 10) and the heat exchange member 2 are adjacent to and in direct contact with each other in the arrangement direction X. However, the heat exchange member side facing surface 8c (heat exchange member side facing surface group 80) and the heat exchange member 2 may be adjacent to and in contact with each other in the arrangement direction X with a member (heat conductive member), such as a heat transfer sheet having no adhesiveness, interposed therebetween. That is, another member may be disposed between the heat exchange member side facing surface 8c (heat exchange member side facing surface group 80) and the heat exchange member 2 in the arrangement direction X. Here, when the heat exchange member 2 has no insulating property, it is preferable that another member have an insulating property. When the battery module 5, including such a heat conductive member, is manufactured, a heat conductive member 7 may be disposed, in the first step, between the battery cell 1 and the heat exchange member 2 in the arrangement direction X.

Hereinafter, the battery module (5) and the method for manufacturing a battery module described above will be briefly summarized.

As one aspect, the battery module (5) includes at least one battery cell (1), a heat exchange member (2) in which a flow path (24) through which a heat medium flows is formed, and a holding member (3) that holds a positional relationship between the battery cell (1) and the heat exchange member (2), in which, assuming that a direction, in which the battery cell (1) and the heat exchange member (2) are arranged, is an arrangement direction (X) and a surface of the battery cell (1) facing the heat exchange member (2) side is a heat exchange member side facing surface (8c): the heat exchange member side facing surface (8c) has a shape having unevenness in the arrangement direction (X); and the heat exchange member (2) has higher flexibility than the heat exchange member side facing surface (8c), and is pressed toward the heat exchange member side facing surface (8c) side by the holding member (3) in a state of being deformed following the shape of the heat exchange member side facing surface (8c).

According to this configuration, the heat exchange member (2) has higher flexibility than the heat exchange member side facing surface (8c) of the battery cell (1), and is pressed toward the heat exchange member side facing surface (8c) side so as to be deformed following the shape of the heat exchange member side facing surface (8c). Therefore, even if there is an error in the position or shape of the battery cell (1), it is easy to increase the heat transfer efficiency between the battery cell (1) and the heat exchange member (2), while the positional relationship between the battery cell (1) and the heat exchange member (2) is defined. In addition, since a configuration is adopted in which the heat exchange member (2) is pressed toward the heat exchange member side facing surface (8c) side by the holding member (3) such that the heat exchange member (2) is in a state of being deformed following the shape of the heat exchange member side facing surface (8c), it is possible to reduce the need to interpose an adhesive, a filler, or the like between the battery cell (1) and the heat exchange member (2). Therefore, it is easy to disassemble the battery module (5).

The technical features of the battery module (5) described above are also applicable to the method for manufacturing a battery module. Representative aspects thereof will be exemplified below. For example, the method for manufacturing a battery module can include various steps having the features of the battery module (5) described above. Naturally, the method for manufacturing a battery module can also exhibit the functions and effects of the battery module (5) described above. Furthermore, as preferred aspects of the battery module (5), various additional features exemplified below can also be incorporated in the method for manufacturing a battery module, and the method for manufacturing a battery module can also exhibit functions and effects corresponding to each of the additional features.

As one preferred aspect, the method for manufacturing a battery module is a method for manufacturing a battery module (5) including at least one battery cell (1), a heat exchange member (2) in which a flow path through which a heat medium flows is formed, and a holding member (3) that holds a positional relationship between the battery cell (1) and the heat exchange member (2), the method including, assuming that a direction, in which the battery cell (1) and the heat exchange member (2) are arranged side by side, is an arrangement direction (X) and a surface of the battery cell (1) facing the heat exchange member (2) side is a heat exchange member side facing surface (8c): a step of disposing side by side the battery cell (1) and the heat exchange member (2) having higher flexibility than the heat exchange member side facing surface (8c) in a state where the heat exchange member side facing surface (8c) has a shape having unevenness in the arrangement direction (X); and a step of pressing the heat exchange member (2) toward the heat exchange member side facing surface (8c) side by the holding member (3) such that the heat exchange member (2) is in a state of being deformed following the shape of the heat exchange member side facing surface (8c).

In addition, it is preferable that, in the battery module (5), the heat exchange member (2) have an electrical insulating property.

According to this configuration, it is possible to reduce the need to separately dispose a member for securing an electrical insulating property between the battery cell (1) and the heat exchange member (2). Therefore, it is easy to increase the heat transfer efficiency between the battery cell and the heat exchange member with a simple configuration, without causing a short circuit.

In addition, it is preferable that, in the battery module (5), the heat exchange member (2) include a pair of outer wall portions (20) disposed to face each other in the arrangement direction (X), and a partition wall portion (23) disposed in a region sandwiched between the pair of outer wall portions (20) and having higher hardness than the pair of outer wall portions (20), and the flow path (24) be formed in a space where the pair of outer wall portions (20) face each other in a state of being partitioned by the partition wall portion (23).

According to this configuration, it is possible to enhance the followability of the shape of the heat exchange member (2) to the shape of the heat exchange member side facing surface (8c) of the battery cell (1), and to make it difficult for the flow path (24) inside to be blocked by the deformation of the heat exchange member (2).

In addition, it is preferable that: the battery module (5) include at least two battery cell arrays (10) each including a plurality of the battery cells (1) disposed to be arranged side by side along a direction (Y) orthogonal to the arrangement direction (X); the heat exchange member (2) be disposed between a first battery cell array (11), which is one of the two battery cell arrays (10), and a second battery cell array (12), which is the other of the two battery cell arrays (11), in the arrangement direction (X); assuming that a set of the heat exchange member side facing surfaces (8c) of the plurality of the battery cells (1) constituting the first battery cell array (11) is a heat exchange member side first facing surface group (81) and a set of the heat exchange member side facing surfaces (8c) of the plurality of the battery cells (1) constituting the second battery cell array (12) is a heat exchange member side second facing surface group (82), the heat exchange member side first facing surface group (81) and the heat exchange member side second facing surface group (82) have shapes having unevenness in the arrangement direction (X); assuming that one side in the arrangement direction (X) is an arrangement direction first side (X1) and the other side is an arrangement direction second side (X2), the first battery cell array (11) be disposed on the arrangement direction first side (X1) with respect to the second battery cell array (12); the holding member (3) include a first holding member (31) disposed on the arrangement direction first side (X1) with respect to the first battery cell array (11), and a second holding member (32) disposed on the arrangement direction second side (X2) with respect to the second battery cell array (12); a positional relationship between the first holding member (31) and the second holding member (32) in the arrangement direction (X) be fixed; and the heat exchange member (2) be sandwiched between the heat exchange member side first facing surface group (81) and the heat exchange member side second facing surface group (82) in a state of being deformed following the shapes of the heat exchange member side first facing surface group (81) and the heat exchange member side second facing surface group (82).

According to this configuration, by disposing the heat exchange member (2) between the first battery cell array (11) and the second battery cell array (12) in the arrangement direction (X) and sandwiching the heat exchange member (2) between the heat exchange member side first facing surface group (81) and the heat exchange member side second facing surface group (82), the heat exchange member (2) can be properly pressed toward the facing surface (8) side of the battery cell (1). Therefore, it is easy to increase the heat transfer efficiency between the battery cell (1) and the heat exchange member (2), while the positional relationship between the battery cell (1) and the heat exchange member (2) is defined.

In addition, it is preferable that: the battery module (5) include at least one battery cell array (10) including a plurality of the battery cells (1) disposed to be arranged side by side along a direction (Y) orthogonal to the arrangement direction (X); assuming that one side in the arrangement direction (X) is an arrangement direction first side (X1) and the other side is an arrangement direction second side (X2), the holding member (3) include a first holding member (31) disposed on the arrangement direction first side (X1) with respect to the battery cell array (10), and a second holding member (32) disposed on the arrangement direction second side (X2) with respect to the battery cell array (10); a positional relationship between the first holding member (31) and the second holding member (32) in the arrangement direction (X) be fixed; the heat exchange member (2) be disposed between the battery cell array (10) and the first holding member (31) in the arrangement direction (X); a support surface (3s), which is a surface of the first holding member (31) facing the heat exchange member (2) side, have a shape having unevenness in the arrangement direction (X); assuming that a set of the heat exchange member side facing surfaces (8c) of the plurality of the battery cells (1) constituting the battery cell array (10) is a heat exchange member side facing surface group (80), the heat exchange member side facing surface group (80) have a shape having unevenness in the arrangement direction (X); and the heat exchange member (2) be sandwiched between the heat exchange member side facing surface group (80) and the support surface (3s) in a state of being deformed following the shapes of the heat exchange member side facing surface group (80) and the support surface (3s).

According to this configuration, by disposing the heat exchange member (2) between the battery cell array (10) and the first holding member (31) in the arrangement direction (X) and sandwiching the heat exchange member (2) between the heat exchange member side facing surface group (80) and the support surface (3s), the heat exchange member (2) can be properly pressed toward the heat exchange member side facing surface (8c) side of the battery cell (1). Therefore, it is easy to increase the heat transfer efficiency between the battery cell (1) and the heat exchange member (2), while the positional relationship between the battery cell (1) and the heat exchange member (2) is defined.

## Claims

1. A battery module (5) comprising;
at least one battery cell (1);
a heat exchange member (2) in which a flow path (24) through which a heat medium flows is formed; and
a holding member (3) that holds a positional relationship between the battery cell (1) and the heat exchange member (2), wherein
assuming that a direction, in which the battery cell (1) and the heat exchange member (2) are arranged side by side, is an arrangement direction (X) and
a surface of the battery cell (1) facing the heat exchange member (2) side is a heat exchange member side facing surface (8c):
the heat exchange member side facing surface (8c) has a shape having unevenness in the arrangement direction (X); and
the heat exchange member (2)
has higher flexibility than the heat exchange member side facing surface (8c), and
is pressed toward the heat exchange member side facing surface (8c) side by the holding member (3) in a state of being deformed following the shape of the heat exchange member side facing surface (8c).

2. The battery module (5) according to Claim 1, wherein the heat exchange member (2) has an electrical insulating property.

3. The battery module (5) according to Claim 1, wherein
the heat exchange member (2) includes a pair of outer wall portions (20) disposed to face each other in the arrangement direction (X), and a partition wall portion (23) disposed in a region sandwiched between the pair of outer wall portions (20) and having higher hardness than the pair of outer wall portions (20), and
the flow path (24) is formed in a space where the pair of outer wall portions (20) face each other in a state of being partitioned by the partition wall portion (23).

4. The battery module (5) according to any one of Claims 1 to 3, comprising at least two battery cell arrays (10) each including a plurality of the battery cells (1) disposed to be arranged side by side along a direction (Y) orthogonal to the arrangement direction (X), wherein:
the heat exchange member (2) is disposed between a first battery cell array (11), which is one of the two battery cell arrays (10), and a second battery cell array (12), which is the other of the two battery cell arrays (10), in the arrangement direction (X);
assuming that a set of the heat exchange member side facing surfaces (8c) of the plurality of the battery cells (1) constituting the first battery cell array (11) is a heat exchange member side first facing surface group (81), and a set of the heat exchange member side facing surfaces (8c) of the plurality of the battery cells (1) constituting the second battery cell array (12) is a heat exchange member side second facing surface group (82),
the heat exchange member side first facing surface group (81) and the heat exchange member side second facing surface group (82) have shapes having unevenness in the arrangement direction (X);
assuming that one side in the arrangement direction is an arrangement direction first side (X1) and the other side is an arrangement direction second side (X2),
the first battery cell array (11) is disposed on the arrangement direction first side (X1) with respect to the second battery cell array (12);
the holding member (3) includes a first holding member (31) disposed on the arrangement direction first side (X1) with respect to the first battery cell array (11) and a second holding member (32) disposed on the arrangement direction second side (X2) with respect to the second battery cell array (12);
a positional relationship between the first holding member (31) and the second holding member (32) in the arrangement direction (X) is fixed; and
the heat exchange member (2) is sandwiched between the heat exchange member side first facing surface group (81) and the heat exchange member side second facing surface group (82) in a state of being deformed following shapes of the heat exchange member side first facing surface group (81) and the heat exchange member side second facing surface group (82).

5. The battery module (5) according to any one of Claims 1 to 3, comprising at least one battery cell array (10) including a plurality of the battery cells (1) disposed to be arranged side by side along a direction (Y) orthogonal to the arrangement direction (X), wherein:
assuming that one side in the arrangement direction (X) is an arrangement direction first side (X1) and the other side is an arrangement direction second side (X2),
the holding member (3) includes a first holding member (31) disposed on the arrangement direction first side (X1) with respect to the battery cell array (10), and a second holding member (32) disposed on the arrangement direction second side (X2) with respect to the battery cell array (10);
a positional relationship between the first holding member (31) and the second holding member (32) in the arrangement direction (X) is fixed;
the heat exchange member (2) is disposed between the battery cell array (10) and the first holding member (31) in the arrangement direction (X);
a support surface (3s), which is a surface of the first holding member (31) facing the heat exchange member (2) side, has a shape having unevenness in the arrangement direction (X);
assuming that a set of the heat exchange member side facing surfaces (8c) of the plurality of the battery cells (1) constituting the battery cell array (10) is a heat exchange member side facing surface group (80),
the heat exchange member side facing surface group (80) has a shape having unevenness in the arrangement direction (X); and
the heat exchange member (2) is sandwiched between the heat exchange member side facing surface group (80) and the support surface (3s) in a state of being deformed following the shapes of the heat exchange member side facing surface group (80) and the support surface (3s).

6. A method for manufacturing a battery module (5) including
at least one battery cell (1),
a heat exchange member (2) in which a flow path (24) through which a heat medium flows is formed, and
a holding member (3) that holds a positional relationship between the battery cell (1) and the heat exchange member (2), the method comprising
assuming that a direction, in which the battery cell (1) and the heat exchange member (2) are arranged side by side, is an arrangement direction (X) and a surface of the battery cell (1) facing the heat exchange member (2) side is a heat exchange member side facing surface (8c):
a step of disposing side by side the battery cell (1) and the heat exchange member (2) having higher flexibility than the heat exchange member side facing surface (8c) in an arrangement direction (X) in a state where the heat exchange member side facing surface (8c) has a shape having unevenness in the arrangement direction (X); and
a step of pressing the heat exchange member (2) toward the heat exchange member side facing surface (8c) side by the holding member (3) such that the heat exchange member (2) is in a state of being deformed following the shape of the heat exchange member side facing surface (8c).
